Europäisches Patentamt

European Patent Office

Office européen des brevets

(19)

(11) **EP 1 531 576 A2**

(12) ## EUROPEAN PATENT APPLICATION

(43) Date of publication:
**18.05.2005 Bulletin 2005/20**

(51) Int Cl.⁷: $H04L\ 1/16$

(21) Application number: **04027071.2**

(22) Date of filing: **15.11.2004**

(84) Designated Contracting States:
**AT BE BG CH CY CZ DE DK EE ES FI FR GB GR HU IE IS IT LI LU MC NL PL PT RO SE SI SK TR**
Designated Extension States:
**AL HR LT LV MK YU**

(30) Priority: **15.11.2003 KR 2003080885**

(71) Applicant: **Samsung Electronics Co., Ltd.**
**Suwon-si, Gyeonggi-do (KR)**

(72) Inventors:
• **Han, Jeong-Hoon**
**Yeongtong-gu Suwon-si Gyeonggi-do (KR)**

• **Lim, Young-Seok**
**Yeongtong-gu Suwon-si Gyeonggi-do (KR)**
• **Paik, Kyung-Hyun**
**Yeongtong-gu Suwon-si Gyeonggi-do (KR)**
• **Joo, Jung-Hoon**
**Yeongtong-gu Suwon-si Gyeonggi-do (KR)**
• **Moon, Yong-Suk**
**Yeongtong-gu Suwon-si Gyeonggi-do (KR)**

(74) Representative: **Lang, Johannes, Dipl.- Ing.**
**Paten-und Rechtsanwälte,**
**Bardehle Pagenberg Dost Altenberg Geissler**
**Galileiplatz 1**
**81679 München (DE)**

(54) **Apparatus and method for transmitting control information in a mobile communication system**

(57)    An apparatus and a method for transmitting control information in a mobile communication system are disclosed. In a mobile communication system including a transmitter for transmitting data and a receiver for receiving the data, when transmitting information regarding whether the data have been received, the receiver generates identifiers having different signs according to whether received data contain an error, adds the generated identifiers to a physical channel, and transmits the physical channel. The transmitter detects a sign corresponding to an existence or absence of an error from the information regarding whether or not the data have been received, detects transmission error for the data according to the detected sign, and determines whether the data are retransmitted according to a result of the detection.

FIG.3

EP 1 531 576 A2

**Description**

**BACKGROUND OF THE INVENTION**

Field of the Invention

The present invention relates to an apparatus and a method for transmitting control information representing whether or not uplink packet data are received in a mobile communication network. More particularly, the present invention relates to an apparatus and a method for transmitting control information without using a separate channel or code.

Description of the Related Art

In a code division multiple access (CDMA) mobile communication system, an international mobile telecommunication ('IMT')-2000 standard enabling transmission of voice and high speed data has been developed from an IS-95 standard mainly transceiving a voice signal. The IMT-2000 standard targets a voice service, a dynamic image service and an Internet search service of high quality.

As described above, the mobile communication system includes various schemes for providing information such as voice, data, etc. The representative scheme is a high speed downlink packet access ('HSDPA') scheme in a universal mobile terrestrial system (UMTS) communication system.

Generally, an HSDPA scheme is the general term for data transmission schemes using high speed-downlink shared channels ('HS-DSCHs'), which are downlink data channels for supporting high speed downlink packet data transmission, and control channels relating to the HS-DSCHs. Further, an adaptive modulation and coding ('AMC') scheme, a hybrid automatic retransmission request ('HARQ') scheme and a fast cell select ('FCS') scheme have been proposed to support a high speed downlink packet data service. Hereinafter, the HARQ scheme, particularly, an n-channel stop and wait hybrid automatic retransmission request ('n-channel SAW HARQ') scheme will be described.

The HARQ scheme has employed the following two methods to improve the transmission efficiency of an automatic retransmission request (ARQ) scheme: one method is to perform a retransmission request and response between a user equipment ('UE') and a node B; and the other method is to enable a UE to temporarily store data having an error, combine the stored data with retransmission data of the corresponding data (data having the error), and decode the combined data. In a single channel SAW HARQ scheme, the next packet data are transmitted only after an ACK for previous packet data are received. However, since the next packet data are transmitted only after the ACK for the previous packet data are received in this way, there may occur a case in which current packet data are not transmitted before the ACK for the previous packet data is received.

In the n-channel SAW HARQ scheme, a plurality of packet data are continuously transmitted without receiving the ACK for the previous packet data, so that the use efficiency of a channel can be improved. That is, n logical channels capable of being distinguished from each other by a specific time or a channel number are set between a UE and a node B. The UE receiving packet data recognizes a channel through which the received packet data have been transmitted and performs necessary processing for the received packet data. For instance, the UE restructures the packet data according to a sequence by which the packet data must be received or performs a soft combining for the packet data.

The following tables 1 and 2 show physical channels used in a downlink and an uplink of a mobile communication system.

Table 1

| Downlink Physical channel | Function |
|---|---|
| DPDCH | Dedicated physical data channel |
| DPCCH | Dedicated physical control channel |
| CPICH | Common pilot channel |
| P-CCPCH | Primary common control physical channel |
| S-CCPCH | Second common control physical channel |
| SCH | Synchronization channel |
| PDSCH | Physical downlink shared channel |

Table 1   (continued)

| Downlink Physical channel | Function |
|---|---|
| AICH | Acquisition indicator channel |
| AP-AICH | Access preamble acquisition indicator channel |
| PICH | Paging indicator channel |
| CSICH | CPCH(common packet channel) status indicator channel |
| CD/CA-ICH | CPCH collision detection/channel assignment indicator channel |
| HS-PDSCH | High speed-physical downlink shared control channel |
| HS-SCCH | High speed-shared control channel |

Table 2

| Uplink Physical channel | Function |
|---|---|
| DPDCH | Dedicated physical data channel |
| DPCCH | Dedicated physical control channel |
| PRACH | Physical random access channel |
| PCPCH | Physical common packet channel |
| HS-DPCCH | High speed-dedicated physical control channel |

The downlink physical channels are distinguished from each other by means of orthogonal variable spreading factors ('OVSFs') code.

In a mobile communication system, a scheme similar to a scheme for supporting a packet data service through a downlink may be introduced to support a packet data service through an uplink. That is, similar to a downlink, a stop and wait automatic retransmission request (SAW ARQ) scheme and the n-channel SAW HARQ scheme may be introduced.

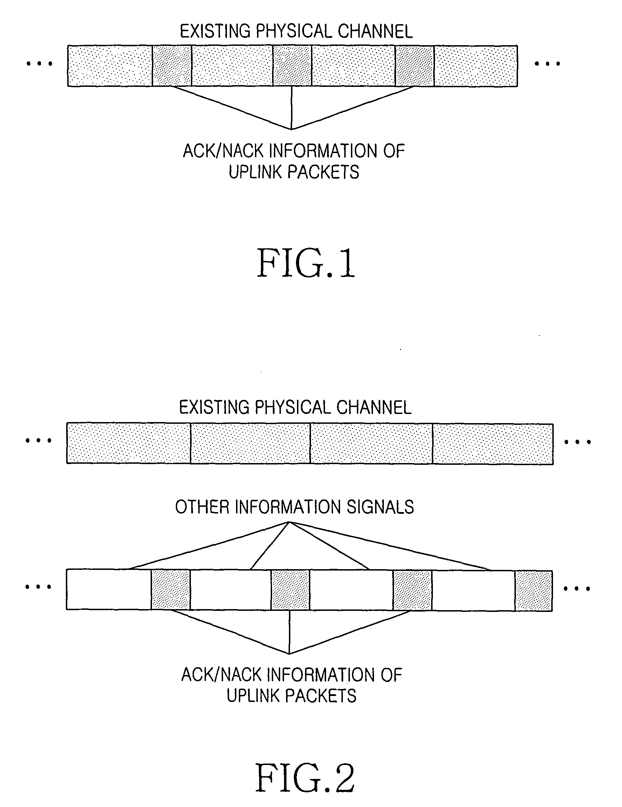

In an uplink packet data service using the ARQ scheme and the n-channel SAW HARQ scheme, a scheme for transmitting control information ('ACK/NACK information') regarding whether or not the packet data have been received without an error by means of a downlink will be described. The scheme for transmitting the ACK/NACK information by means of the downlink may be classified into a time multiplexing scheme and a code multiplexing scheme. Hereinafter, the time multiplexing scheme will be described with reference to FIG. 1 and the code multiplexing scheme will be described with reference to FIG 2.

FIG 1 shows the downlink physical channel. The kind and the functions of the downlink physical channels are as shown in table 1. Referring to FIG 1, the ACK/NACK information is time-multiplexed in a space obtained by puncturing the data of the physical channel and is then transmitted. That is, the physical channel transports the ACK/NACK information contained in a predetermined interval in which data are not transmitted.

FIG 2 is a view illustrating a process by which code-multiplexed ACK/NACK information is transmitted through the downlink physical channel. Referring to FIG 2, a separate physical channel for transmitting the ACK/NACK information is generated in addition to the conventional physical channel transporting data, and the ACK/NACK information is transmitted through the generated physical channel. The conventional physical channel and the physical channel for transmitting the ACK/NACK information are distinguished from each other by the OVSF code as described above. Further, the physical channel for transmitting the ACK/NACK information may contain control information indicating an ACK/NACK information transmission channel.

In the scheme shown in FIG. 1, since the ACK/NACK information must be inserted into a predetermined interval of the conventional physical channel, data transmitted through the conventional physical channel may be lost. Further, in the scheme shown in FIG. 2, data transmitted through the conventional physical channel are not lost, but power for the physical channel generated for transmitting the ACK/NACK information and an additional OVSF code must be used.

**SUMMARY OF THE INVENTION**

Accordingly, the present invention has been made to solve the above-mentioned problems occurring in the prior art, and it an object of the present invention to provide an apparatus and a method for transmitting control information for packet data without using a separate channel.

It is another object of the present invention to provide an apparatus and a method for transmitting control information for packet data without data loss.

It is further another object of the present invention to provide an apparatus and a method capable of preventing the transmission performance of a system from being deteriorated by transmitting control information without using a separate channel or code.

In order to accomplish the aforementioned object, according to one aspect of the present, there is provided a method for transmitting information regarding whether data are received in a mobile communication system. The method comprises generating pilot signals having different signs according to whether received data contain an error; and adding the generated pilot signals to dedicated physical channel frames and transmitting the dedicated physical channel frames.

In order to accomplish the aforementioned object, according to one aspect of the present, there is provided a method for transmitting information regarding whether data are received in a mobile communication system. The method comprises selecting a pilot signal having one of different pilot patterns according to whether received data contain an error; and adding the selected pilot signal to a dedicated physical channel frame and transmitting the dedicated physical channel frame.

In order to accomplish the aforementioned object, according to one aspect of the present, there is provided a method for receiving information regarding whether transmitted data are received in a mobile communication system. The method comprises detecting a pilot signal having a sign corresponding to whether or not the transmitted data contain an error from a dedicated physical channel frame; and detecting transmission error for the transmitted data according to a sign of the detected pilot signal and determining whether the transmitted data are retransmitted according to a result of the detection.

In order to accomplish the aforementioned object, according to one aspect of the present, there is provided a method for receiving information regarding whether transmitted data are received in a mobile communication system. The method comprises detecting a pilot signal having a pilot pattern corresponding to whether the transmitted data contain an error from a dedicated physical channel frame; and detecting transmission error for the transmitted data according to the pilot pattern of the detected pilot signal and determining whether the transmitted data are retransmitted according to a result of the detection.

## BRIEF DESCRIPTION OF THE DRAWINGS

The above and other objects, features and advantages of the present invention will be more apparent from the following detailed description taken in conjunction with the accompanying drawings, in which:

FIG 1 is a view illustrating a process by which control information is time-multiplexed in a physical channel according to the prior art;

FIG. 2 is a view illustrating a process by which control information is code-multiplexed in a physical channel according to the prior art;

FIG 3 is a block diagram showing the structure of a transmitter according to a first embodiment of the present invention;

FIG 4 is a block diagram showing the structure of a receiver according to a first embodiment of the present invention;

FIG. 5 is a block diagram showing the structure of a control signal extractor according to a first embodiment of the present invention;

FIG. 6 is a flow diagram illustrating operations performed in a transmitter and a receiver according to a first embodiment of the present invention;

FIG. 7 is a block diagram showing the structure of a transmitter according to a second embodiment of the present invention;

FIG 8 is a block diagram showing the structure of a receiver according to a second embodiment of the present invention;

FIG. 9 is a block diagram showing the structure of a channel estimator according to a second embodiment of the present invention; and

FIG. 10 is a flow diagram illustrating operations performed in a transmitter and a receiver according to a second embodiment of the present invention.

## DETAILED DESCRIPTION OF THE PREFERRED EMBODIMENTS

Hereinafter, embodiments according to the present invention will be described with reference to the accompanying drawings. In the following description of the present invention, a detailed description of known functions and configuration incorporated herein will be omitted for conciseness.

First Embodiment

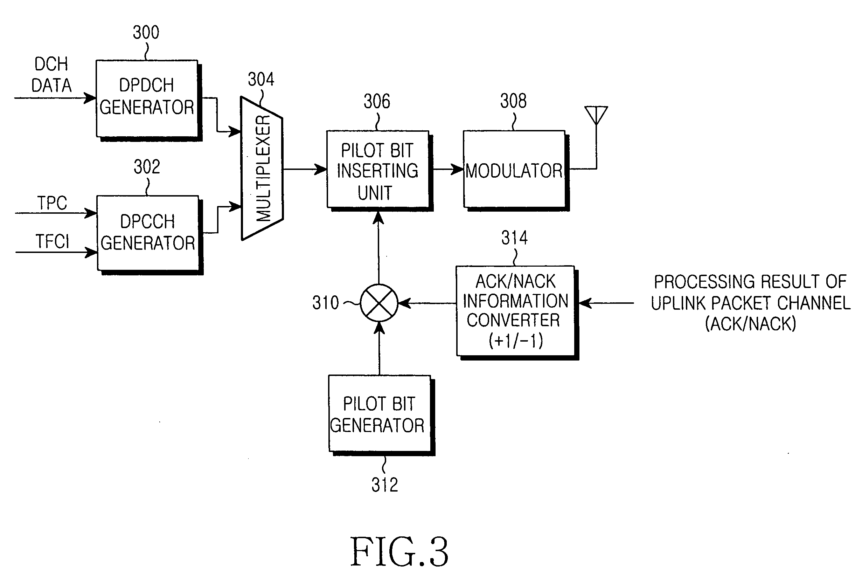

FIG. 3 is a block diagram showing the structure of a transmitter for transmitting ACK/NACK information according to a first embodiment of the present invention. The first embodiment provides a scheme for transmitting the ACK/NACK information by means of the pilot field of the conventional downlink dedicated physical channel ('DPCH').

In the first embodiment, it is assumed that a phase reference of a dedicated channel is a common pilot channel (CPICH). That is, the DPCH, which is a dedicated channel, is transmitted after a dedicated physical control channel (DPCCH) (i.e., control channel), and a dedicated physical data channel (DPDCH) (i.e., data channel) are time-multiplexed. Further, a phase reference of a dedicated channel has been transmitted through the DPCCH. That is, a pilot field capable of being used as a reference for supporting a dedicated channel estimation and a beam forming for channel compensation has been transmitted through the DPCCH. In the first embodiment of the present invention, a CPICH replaces the role of the pilot field. Hereinafter, the structure of the transmitter transmitting ACK/NACK information according to the first embodiment of the present invention will be described with reference to FIG 3. The transmitter includes a DPDCH generator 300, a DPCCH generator 302, a mutiplexer 304, a pilot bit inserting unit 306, a modulator 308, a pilot bit generator 312, an ACK/NACK information converter 314 and a multiplier 310.

A node B having received uplink packet data from a UE demodulates the received data. As a result of the demodulation, the node B analyzes whether or not the received data contain an error and generates ACK/NACK information. When the received data contain an error, the node B generates NACK information requesting retransmission of the packet data. In contrast, when the received data does not contain an error, the node B generates ACK information which does not request the retransmission of the packet data. The generated ACK/NACK information is transmitted to the ACK/NACK information converter 314.

The ACK/NACK information converter 314 generates a specific ACK/NACK signal according to the received ACK/NACK information. That is, when the received information is the ACK information, the ACK/NACK information converter 314 generates a signal having a value of +1. In contrast, when the received information is the NACK information, the ACK/NACK information converter 314 generates a signal having a value of -1. The ACK/NACK signal generated according to the received information may have different values by a user's selection. That is, when the received information is the ACK information, the ACK/NACK information converter 314 may generate - 1. In contrast, when the received information is the NACK information, the ACK/NACK information converter 314 may generate +1. However, generally, the ACK/NACK information converter 314 outputs +1 as a basic value and generates -1 when the received ACK/NACK information is the ACK information. The reason for setting the basic value of the ACK/NACK information converter 314 as +1 is that it is necessary to satisfy the condition proposed by the conventional standard when the ACK/NACK information is not transmitted. The ACK/NACK information converter 314 outputs the generated ACK/NACK signal to the multiplier 310.

Meanwhile, the pilot bit generator 312 generates a pilot signal having a predetermined pilot pattern. The generated pilot pattern is defined by a 3$^{rd}$ Generation Partnership Project (3GPP) standard TS25.211. However, it is clear that the embodiments of the present invention can easily employ other pilot patterns. The generated pilot signal is sent to the multiplier 310. The multiplier 310 performs a multiplication for the received pilot signal and the ACK/NACK signal transmitted from the ACK/NACK information converter 314. The following equation 1 represents an operation performed by the multiplier 310.

**Equation 1**

$$S_i(n) = \begin{cases} A(i) \times p_i(n), & n \in \{Pilot\ Field\} \\ 0 & , n \notin \{Pilot\ Field\} \end{cases},$$

wherein the $S_i(n)$ is an output signal of the multiplier 310, the $A(i)$ is an ACK signal or an NACK signal (i.e., +1 or -1) transmitted from the ACK/NACK information converter 314 corresponding to a i$^{th}$ slot, the $p_i(n)$ is a pilot signal of a downlink DPCH corresponding to an i$^{th}$ slot, and the n is a slot index representing time slots of a physical channel and is classified into pilot fields representing slots including a pilot signal and other fields. According to equation 1, when the n does not belong to the pilot field, the multiplier 310 outputs "0". The pilot signal containing the ACK/NACK information, which is an output of the multiplier 310, is transmitted to the pilot bit inserting unit 306.

Meanwhile, the DPDCH generator 300 generates DPDCH data by means of a received dedicated channel ('DCH') and transmits the generated DPDCH data to the mutiplexer 304. The DPCCH generator 302 generates DPCCH data by means of transmit power control ('TPC') information of a DPDCH and a transport format combination indicator ('TFCI'), and transmits the generated DPCCH data to the mutiplexer 304. The mutiplexer 304 transmits DPCH data obtained by multiplexing the received DPDCH data and DPCCH data to the pilot bit inserting unit 306.

The pilot bit inserting unit 306 outputs a DPCH frame obtained by time-multiplexing the signal transmitted from the multiplier 310 with the DPCH data. The time-multiplexed DPCH frame is modulated by the modulator 308 and is then sent through a transmission antenna.

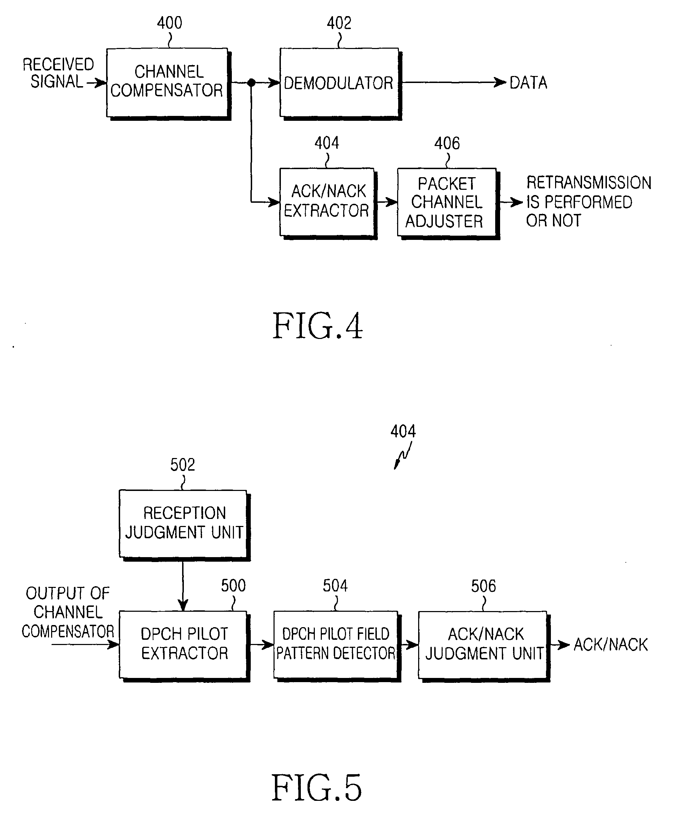

FIG. 4 is a block diagram showing the structure of a receiver according to the first embodiment of the present invention. Data transmitted through a DPDCH and control signals transmitted through a DPCCH may be demodulated through each separate path. However, in an embodiment of the present invention, in order to make the subject matter of the invention clear, only a processing path (concern object) through which ACK/NACK information is processed will be described.

In the receiver shown in FIG. 4, the DPCH signal transmitted from the transmitter is demodulated and is then sent to a channel compensator 400. The received signal having experienced a channel compensation process in the channel compensator 400 is modulated by a modulator 402. Further, the received signal having experienced a channel compensation in the channel compensator 400 is sent to an ACK/NACK extractor 404. The ACK/NACK extractor 404 extracts ACK/NACK information from the pilot signal contained in the received signal. The detailed structure of the ACK/NACK extractor 404 will be described with reference to FIG 5 later. The ACK/NACK information extracted by the ACK/NACK extractor 404 is sent to a packet channel adjuster 406. The packet channel adjuster 406 determines whether or not the previously transmitted uplink packet data are retransmitted according to the received ACK/NACK information.

In FIG 4, the pilot signal is extracted after the channel compensator 400. However, in another embodiment, a pilot signal extracted before the channel compensator 400 may be used in order to perform a channel estimation. That is, in this embodiment of the present invention, the pilot signal used for determination of an ACK/NACK may be extracted at any position regardless of a channel compensation process. Those who are skilled in the art can easily construct the receiver regardless of extracted positions of the pilot signal.

FIG 5 is a block diagram showing the structure of the ACK/NACK extractor 404 according to the first embodiment of the present invention. The ACK/NACK extractor 404 includes a DPCH reception judgment unit 502, a DPCH pilot extractor 500, a DPCH pilot field pattern detector 504 and an ACK/NACK judgment unit 506. Hereinafter, the structure of the ACK/NACK extractor 404 will be described in detail with reference to FIG. 5.

The DPCH reception judgment unit 502 determines whether or not a channel to be currently received is a DPCH. When the channel to be currently received is the DPCH and a current time (time slot) is a time at which the receiver must receive a processing result (i.e., ACK/NACK information) for a channel decoding of an uplink packet channel, the other elements 500, 504 and 506 of FIG. 5 operate.

When the DPCH reception judgment unit 502 determines that the channel to be received is the DPCH and the current time is a time at which the receiver must receive information for the channel decoding result, the DPCH pilot extractor 500 extracts only a pilot field component of the DPCH signal from the reception signal which is an output of the channel compensator 400 and outputs the extracted pilot field component to the DPCH pilot field pattern detector 504. The following equation 2 represents the signal transmitted to the DPCH pilot field pattern detector 504.

Equation 2

$$r_i(n) = A(i) \cdot |h(i,n)|^2 \cdot p_i(n), \ n \in \{pilot\ field\},$$

wherein the $r_i(n)$ represents an $n^{th}$ pilot signal of an $i^{th}$ slot, and the $h(i,n)$ is a padding response signal representing channel environments which the $n^{th}$ pilot signal of the $i^{th}$ slot has experienced. The DPCH pilot field pattern detector 504 detects a pilot field pattern of a DPCH signal as shown in equation 2 by means of a slot format of a DPCH and a slot number in one frame of a DPCH being currently demodulated. The slot number in one frame and a pilot pattern corresponding to the slot number are defined by a 3GPP standard TS25.211. However, it is clear that the embodiments of the present invention can easily employ pilot patterns different from the above pilot pattern. The following equation 3 represents a signal output from the DPCH pilot field pattern detector 504.

Equation 3

$$Y_i = \frac{1}{N_{pilot}} \sum_{n = N_{start}}^{N_{end}} r_i(n) \cdot p_i^*(n),$$
$$= A(i) \cdot |h(i,n)|^2 \cdot |p|^2$$

wherein the $N_{pilot}$ represents the number of pilot symbols contained in a pilot field, the $N_{start}$ represents a start symbol index of the pilot field, the $N_{end}$ represents the last symbol index of the pilot field and the $|p|^2$ represents power of the pilot symbols. In equation 3, a component capable of having a sign is the A(i). Accordingly, the ACK/NACK judgment unit 506 determines whether or not the previously transmitted uplink packet data are retransmitted by means of a sign component A(i) of a $Y_i$ transmitted from the DPCH pilot field pattern detector 504. Herein, when the $Y_i$ has the positive sign, it is determined that the retransmission of the previously transmitted data has been requested.

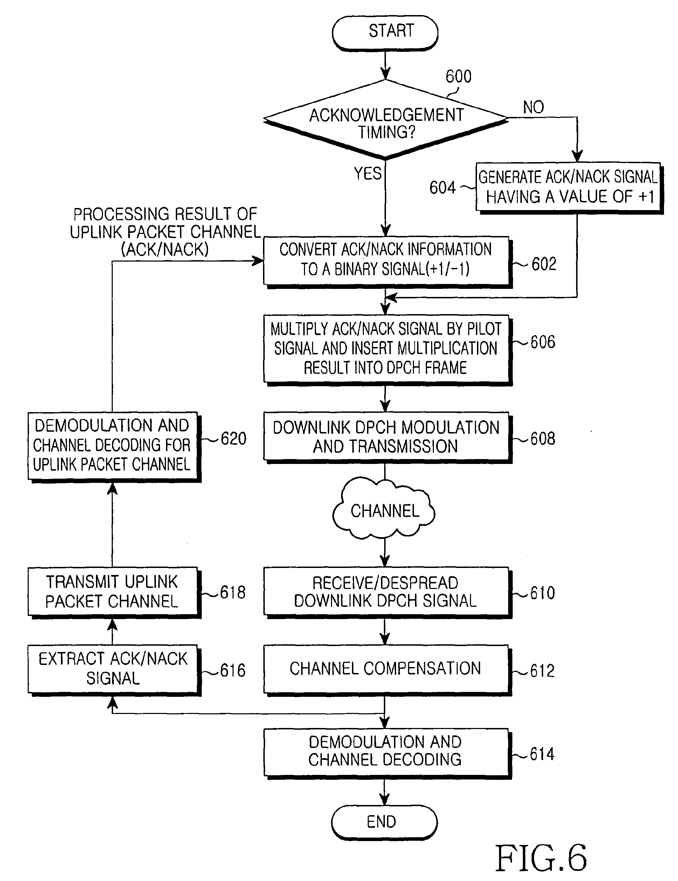

FIG. 6 is a flow diagram illustrating operations of the transmitter and the receiver according to the first embodiment of the present invention. Hereinafter, the operations of the transmitter and the receiver according to the first embodiment of the present invention will be described in detail with reference to FIG. 6.

In step 600, the transmitter determines whether or not a current timing is an acknowledgement timing. Specifically, in step 600, whether or not received packet data contain an error and the data are retransmitted are determined. As a result of the determination, when the current timing is the acknowledgement timing, step 602 is performed. In contrast, when the current timing is not the acknowledgement timing, step 604 is performed. Herein, that the current timing is not the acknowledgement timing may represent a case in which a node B have not received the uplink packet data transmitted from a UE.

In step 602, the transmitter converts a processing result of the uplink packet channel into a binary ACK/NACK signal. The ACK/NACK signal has a value of +1 or -1. The value +1 implies that an error has occurred in the received packet data and the value -1 implies that an error has not occurred in the received packet data. In step 604, an ACK/ NACK signal having a value of +1 as a basic value is generated. In step 606, the transmitter multiplies the ACK/NACK signal by a pilot signal and inserts the multiplication result into a DPCH frame. In step 608, the transmitter modulates the DPCH frame and transmits the modulated DPCH frame to the receiver. A progress to step 610 from step 608 corresponds to transmission on a radio channel.

In step 610, the receiver receives the DPCH signal transmitted from the transmitter and despreads the received DPCH signal. Then, step 612 is performed. That is, the receiver performs a channel compensation process. In step 614, the receiver performs a demodulation and a channel decoding for the received signal having experienced the channel compensation process. Meanwhile, in step 616, the receiver extracts the ACK/NACK signal from the received signal that experienced the channel compensation process. A process of extracting the ACK/NACK signal is as described in FIG 5.

In step 618, the receiver determines whether or not the uplink packet data are retransmitted on the basis of the ACK/NACK signal. That is, in the case of the NACK, the previously transmitted packet data are retransmitted. In contrast, in the case of the ACK, new packet data are retransmitted. In step 620, the transmitter performs a demodulation and a decoding for the uplink packet data, determines whether or not an error has occurred in the uplink packet data, and sends a processing result for the uplink packet channel to step 602.

Generally, when a beam forming technology is used in a system, a pilot field transmitted through a DPCCH is used as a phase reference in a channel estimation process performed for generating an exact beam according to each UE. Herein, when the method as described in the first embodiment is used, the phase of a dedicated pilot is inverted according to an ACK or an NACK and a pilot pattern different from the pilot pattern already known to a node B and a UE is transmitted. Therefore, there may occur a case in which a channel estimation cannot be performed. Accordingly, a second embodiment which will be described hereinafter proposes a scheme of inserting ACK/NACK information into a pilot signal and transmitting the pilot signal without influencing a channel estimation using the dedicated pilot.

Second Embodiment

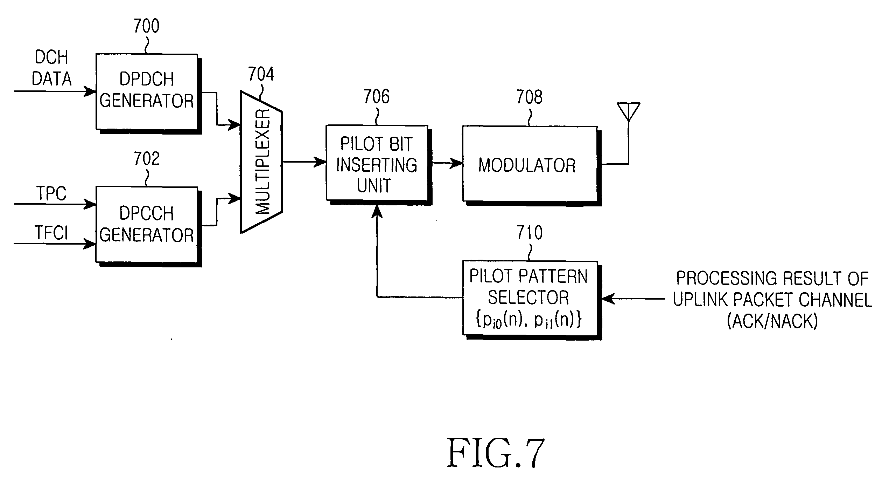

FIG. 7 is a block diagram showing the structure of a transmitter for transmitting ACK/NACK information according to a second embodiment of the present invention. The second embodiment proposes a scheme for transmitting the ACK/NACK information by means of the pilot field of the conventional downlink DPCH. The transmitter includes a DPDCH generator 700, a DPCCH generator 702, a mutiplexer 704, a pilot pattern inserting unit 706, a modulator 708 and a pilot pattern selector 710.

A node B having received uplink packet data from a UE demodulates the received data. As a result of the demodulation, the node B analyzes whether or not the received data contain an error and generates ACK/NACK information. When the received data contain an error, the node B generates NACK information requesting retransmission of the packet data. In contrast, when the received data does not contain an error, the node B generates ACK information which does not request the retransmission of the packet data. The generated ACK/NACK information is transmitted to the pilot pattern selector 710.

The pilot pattern selector 710 generates a specific ACK/NACK signal according to the received ACK/NACK information. That is, when the received ACK/NACK information is ACK information, the pilot pattern selector 710 generates a preset $p_{i1}(n)$. In contrast, when the received information is NACK information, the pilot pattern selector 710

generates a preset $p_{i0}(n)$. The $p_{i0}(n)$ is the same as a pilot pattern for the conventional $i^{th}$ slot and the $p_{i1}(n)$ is a new pilot pattern defined to be perpendicular to the $p_{i0}(n)$. It is possible to define the $p_{i1}(n)$ having orthogonality for all $p_{i0}(n)$ in relation to an $N_{pilot}$ larger than or equal to 2. The ACK/NACK pilot signal, which is an output of the pilot pattern selector 710, is transmitted to the pilot pattern inserting unit 706.

Meanwhile, the DPDCH generator 700 generates DPDCH data by means of a received DCH and transmits the generated DPDCH data to the mutiplexer 704. The DPCCH generator 702 generates DPCCH data by means of a received TPC information and a TFCI, and transmits the generated DPCCH data to the mutiplexer 704. The mutiplexer 704 transmits DPCH data obtained by multiplexing the received DPDCH data and DPCCH data to the pilot pattern inserting unit 706.

The pilot pattern inserting unit 706 outputs a DPCH frame obtained by time-multiplexing the ACK/NACK pilot signal transmitted from the pilot pattern selector 710 with the DPCH data. The time-multiplexed DPCH frame is modulated by the modulator 708 and is then sent through a transmission antenna.

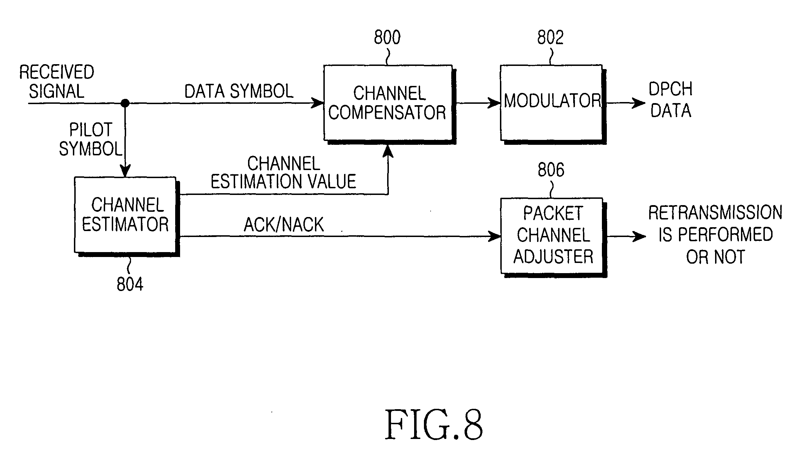

FIG. 8 is a block diagram showing the structure of a receiver according to the second embodiment of the present invention. In the second embodiment, ACK/NACK information is restored in a step before a channel compensation.

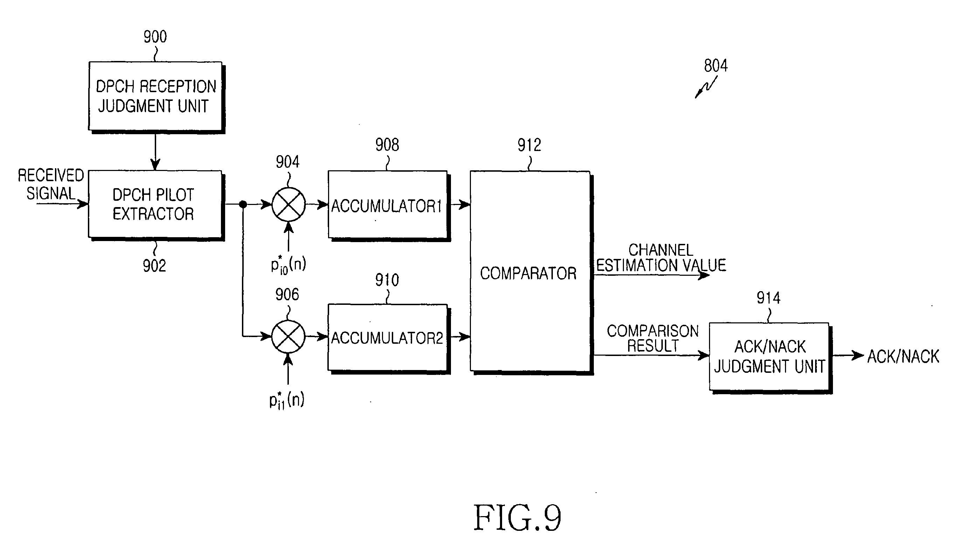

In the receiver shown in FIG. 8, the received signal transmitted from the transmitter is demodulated and is then sent to a channel estimator 804 and a channel compensator 800. The channel estimator 804 performs a channel estimation process by means of the received signal and simultaneously extracts a pilot signal used as the ACK/NACK information from the received signal. The channel estimator 804 will be described in detail with reference to FIG. 9 later. A channel estimated value generated by the channel estimator 804 is sent to the channel compensator 800 and the extracted ACK/NACK information is sent to a packet channel adjuster 806. The received signal having experienced a channel compensation process in the channel compensator 800 is transmitted to a modulator 802. The modulator 802 modulates the received signal to output DPCH data. The packet channel adjuster 806 determines whether or not uplink packet data are retransmitted according to the received ACK/NACK information.

In FIG. 8, the pilot signal is extracted before the channel estimation. However, in another embodiment, a pilot pattern may be extracted from a data symbol for which a channel compensation has been completed and the extracted pilot pattern used. That is, in this embodiment of the present invention, the pilot signal used as ACK/NACK information may be extracted at any position regardless of the positions of the channel estimator 804. Those who are skilled in the art can easily construct the receiver regardless of extracted positions of the pilot signal.

FIG. 9 is a block diagram showing the structure of the channel estimator 804 according to the second embodiment of the present invention. The channel estimator 804 includes a DPCH reception judgment unit 900, a DPCH pilot extractor 902, multipliers 904 and 906, accumulators 908 and 910, a comparator 912 and an ACK/NACK judgment unit 914. Hereinafter, the structure of the channel estimator 804 will be described in detail with reference to FIG. 9.

The DPCH reception judgment unit 900 determines whether or not a channel to be currently received is a DPCH. When the channel to be currently received is the DPCH and a current time (time slot) is a time at which the receiver must receive a processing result (i.e., ACK/NACK information) for a channel decoding of an uplink packet channel, the other elements 902, 904, 906, 908, 910, 912 and 914 of FIG 9 operate.

When the DPCH reception judgment unit 900 determines that the channel to be received is the DPCH and the current time is a time at which the receiver must receive information for the channel decoding result, the DPCH pilot extractor 902 extracts only a pilot field component of the DPCH signal from the reception signal and outputs the extracted pilot field component to the multipliers 904 and 906. The multipliers 904 and 906 receive the pilot symbols of the pilot field component. The following equation 4 represents the signals input to the multipliers 904 and 906.

Equation 4

$$\overline{r_i(n)} = |h(i,n)| \cdot p_{ij}(n), \ n \in \{\textit{Pilot Field}\},$$

wherein the $p_{ij}(n)$ (j=0 or 1) represents a pilot pattern used in the transmitter, the $\overline{r_i(n)}$ represents a received signal having experienced a dispreading process before a channel compensation, and the i is a slot index. The multiplier 904 performs a multiplication for the input pilot symbols and a $p_{i0}^{*}(n)$ which is a pilot pattern assigned to an $i^{th}$ slot and sends the multiplication result to the accumulator 908. The multiplier 906 performs a multiplication for the input pilot symbols and a $p_{i1}^{*}(n)$ which is perpendicular to the $p_{i0}^{*}(n)$ and is a pilot pattern assigned to ACK information, and sends the multiplication result to the accumulator 912. The accumulators 908 and 910 accumulate the signals sent from each of the multipliers 904 and 906 by a predetermined period of time.

The following equation 5 represents operations performed by the accumulators 908 and 910.

**Equation 5**

$$Y_i = \frac{1}{N_{pilot}} \sum_{n=N_{sum}}^{N_{end}} r_i(n) \cdot p_{ik}^*(n) = \begin{cases} \bar{h}(i,n) \cdot |P|^2 & j = k \\ 0 & j \neq k, \end{cases}$$

As shown in equation 5, when the pilot pattern used in the transmitter is equal to that input to one of the multipliers in the receiver, the output of a corresponding multiplier has a value of $\bar{h}(i,n) \cdot |P|^2$. In contrast, when the pilot pattern used in the transmitter is different from that input to one of the multipliers in the receiver, that is, the two pilot patterns are perpendicular to each other, the output of the corresponding multiplier has a value of 0.

The comparator 912 compares the sizes of the signals transmitted from the accumulators 908 and 910. As a result of the comparison, when the signal transmitted from the accumulator 908 has a size larger than that transmitted from the accumulator 910, the comparator 912 outputs the output of the accumulator 908 as a channel estimation value. In contrast, when the signal transmitted from the accumulator 910 has a size larger than that transmitted from the accumulator 908, the comparator 912 outputs the output of the accumulator 910 as a channel estimation value. The comparator 912 sends the output of the accumulator 908 or the accumulator 910 to the channel compensator 800 according to the comparison result.

Further, the ACK/NACK judgment unit 914 detects an ACK/NACK according to the comparison result and sends the detection result to the packet channel adjuster 806. In detail, when the output value from the accumulator 908 is larger than the output value from the accumulator 910, the ACK/NACK judgment unit 914 detects an ACK. In contrast, when the output value from the accumulator 910 is larger than the output value from the accumulator 908, the ACK/NACK judgment unit 914 detects an NACK.

The detection of an ACK/NACK based on a selected accumulator is performed according to the type of pilot patterns used in the multipliers 904 and 906. That is, when the value of a accumulator accumulating the value of a multiplier multiplying a preset pilot pattern of a corresponding slot is selected, the ACK/NACK judgment unit 914 detects the received signal as an ACK. In contrast, when the value of a accumulator accumulating the value of a multiplier multiplying a pilot pattern of an ACK information is selected, the ACK/NACK judgment unit 914 detects the received signal as an NACK.

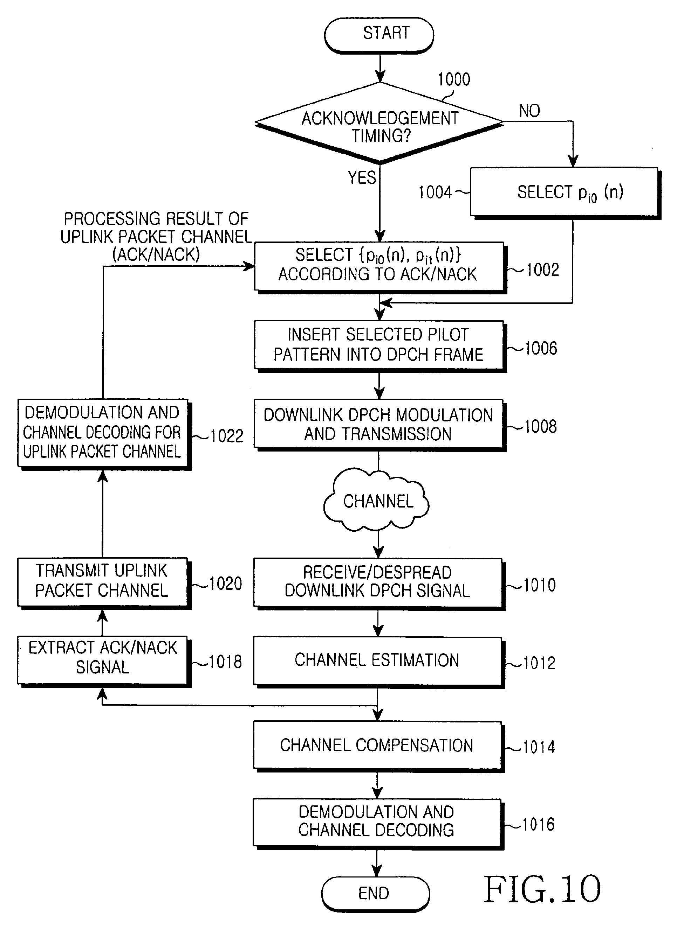

FIG. 10 is a flow diagram illustrating operations of the transmitter and the receiver according to the second embodiment of the present invention. Hereinafter, the operations of the transmitter and the receiver according to the second embodiment of the present invention will be described in detail with reference to FIG 10.

In step 1000, the transmitter determines whether or not a current timing is an acknowledgement timing. Specifically, in step 1000, whether or not received packet data contain an error and data are retransmitted are determined. As a result of the determination, when the current timing is the acknowledgement timing, step 1002 is performed. In contrast, when the current timing is not the acknowledgement timing, step 1004 is performed. In step 1002, the transmitter selects a pilot pattern corresponding to a processing result of an uplink packet channel. The pilot pattern corresponding to the processing result of the uplink packet channel includes a $p_{i0}(n)$ or a $p_{i1}(n)$. The $p_{i0}(n)$ is a preset pilot pattern of a corresponding $i^{th}$ slot and indicates that there is no error in the received packet data (i.e. ACK). The $p_{i1}(n)$ is a pattern perpendicular to the preset pilot pattern and means that an error has occurred in the received packet data (i.e. NACK). In step 1004, the $p_{i0}(n)$ is selected as a pilot pattern.

The pilot pattern selected in step 1002 or step 1004 is sent to step 1006. In step 1006, the transmitter inserts a pilot signal having the selected pilot pattern into a DPCH frame. Then, in step 1008, the transmitter modulates the DPCH frame and transmits the modulated DPCH frame to the receiver. In reference, a progress to step 1010 from step 1008 corresponds to transmission on a radio channel.

In step 1010, the receiver receives the DPCH signal transmitted from the transmitter and despreads the received DPCH signal. Then, step 1012 is performed. That is, the receiver performs a channel estimation process. In steps 1014 and 1016, the receiver performs a channel compensation, a demodulation and a channel decoding for the received DPCH signal. Meanwhile, in step 1018, the receiver extracts a pilot pattern of a pilot signal corresponding to ACK/NACK information from the received signal that experienced the channel estimation. A process of extracting the ACK/NACK signal is as described in FIG 9.

In step 1020, the receiver determines whether or not the uplink packet data are retransmitted on the basis of the ACK/NACK signal. That is, in the case of the NACK, the previously transmitted packet data are retransmitted. In contrast, in the case of the ACK, new packet data are retransmitted.

In step 1022, the transmitter performs a demodulation and a decoding for the received uplink packet data, determines whether or not there is an error in the uplink packet data through the demodulation and the decoding, and sends a processing result for the uplink packet channel to step 1002.

As described above, since the embodiments of the present invention do not use a separate physical channel in order to transmit a channel decoding result (ACK/NACK information) of an uplink packet channel, additional power and OVSF code are not used. Further, in an embodiment of the present invention, a channel decoding result of an uplink packet channel is transmitted without the data loss of the conventional physical channel, thereby preventing the performance of the physical channel from being deteriorated.

Although a certain embodiment of the present invention has been described for illustrative purposes, those skilled in the art will appreciate that various modifications, additions and substitutions are possible, without departing from the scope of the invention as disclosed in the accompanying claims, including the full scope of equivalents thereof.

## Claims

1. A method for transmitting information regarding whether data are received in a mobile communication system, the method comprising the steps of:

   generating pilot signals having different signs according to whether received data contain an error; and
   adding the generated pilot signals to dedicated physical channel frames and transmitting the dedicated physical channel frames.

2. The method as claimed in claim 1, wherein the pilot signal has a positive sign when an error has occurred in the received data and has a negative sign when an error has not occurred in the received data.

3. A method for transmitting information regarding whether data are received in a mobile communication system, the method comprising the steps of:

   selecting a pilot signal having one of different pilot patterns according to whether or not received data contain an error; and
   adding the selected pilot signal to a dedicated physical channel frame and transmitting the dedicated physical channel frame.

4. The method as claimed in claim 3, wherein the different pilot patterns are perpendicular to each other.

5. The method as claimed in claim 4, wherein, when the received data contain an error, a pilot signal having a pattern equal to a pilot pattern used when there is no report about whether the received data contain an error is selected.

6. A method for receiving information regarding whether transmitted data are received in a mobile communication system, the method comprising the steps of:

   detecting a pilot signal having a sign corresponding to whether or not the transmitted data contain an error from a dedicated physical channel frame; and
   detecting transmission error for the transmitted data according to a sign of the detected pilot signal and determining whether or not the transmitted data are retransmitted according to a result of the detection.

7. The method as claimed in claim 6, wherein the pilot signal has a positive sign when the transmitted data contain an error and has a negative sign when the transmitted data does not contain an error.

8. A method for receiving information regarding whether transmitted data are received in a mobile communication system, the method comprising the steps of:

   detecting a pilot signal having a pilot pattern corresponding to whether or not the transmitted data contain an error from a dedicated physical channel frame; and
   detecting transmission error for the transmitted data according to the pilot pattern of the detected pilot signal and determining whether the transmitted data are retransmitted according to a result of the judgment.

9. The method as claimed in claim 8, wherein the pilot signal has one of pilot patterns perpendicular to each other according to whether the transmitted data contain an error.

**10.** The method as claimed in claim 9, wherein the pilot pattern corresponding to whether or not the transmitted data contain an error is detected by performing a multiplication operation for the received pilot pattern and the preset pilot patterns perpendicular to each other.

**11.** The method as claimed in claim 10, wherein the transmitted data are determined to be retransmitted when the pilot signal has a pilot pattern used when there is no report about whether the transmitted data contain an error.

**12.** An apparatus for transmitting information regarding whether data are received in a mobile communication system, the apparatus comprising:

a control information converter for generating pilot signals having different signs according to whether received data contain an error;
a pilot bit inserting unit for adding the generated pilot signals to dedicated physical channel frames; and
a modulator for modulating the physical channel frames including the pilot signals and transmitting the modulated physical channel frames.

**13.** The apparatus as claimed in claim 12, wherein the pilot signal has a positive sign when the received data contain an error and has a negative sign when the received data does not contain an error.

**14.** An apparatus for transmitting information regarding whether data are received in a mobile communication system, the apparatus comprising:

a pilot pattern selector for selecting a pilot signal having one of different pilot patterns according to whether received data contain an error;
a pilot pattern inserting unit for adding the selected pilot signal to a dedicated physical channel frame; and
a modulator for modulating the physical channel frames including the pilot signals and transmitting the modulated physical channel frames.

**15.** The apparatus as claimed in claim 14, wherein the different pilot patterns are perpendicular to each other.

**16.** The apparatus as claimed in claim 15, wherein, when the received data contain an error, the pilot pattern selector selects a pilot signal having a pattern equal to a pilot pattern used when there is no report about whether or not the received data contain an error.

**17.** An apparatus for receiving information regarding whether transmitted data are received in a mobile communication system, the apparatus comprising:

a control signal extractor for detecting a pilot signal having a sign corresponding to whether the transmitted data contain an error from a dedicated physical channel frame; and
a packet channel adjuster for detecting transmission error for the transmitted data according to a sign of the detected pilot signal and determining whether the transmitted data are retransmitted according to a result of the detection.

**18.** The apparatus as claimed in claim 17, wherein the pilot signal has a positive sign when the transmitted data contain an error and has a negative sign when the transmitted data does not contain an error.

**19.** An apparatus of a transmitter for receiving information regarding whether transmitted data are received in a mobile communication system, the apparatus comprising:

a channel estimator for detecting a pilot signal having a pilot pattern corresponding to whether the transmitted data contain an error from a dedicated physical channel frame; and
a packet channel adjuster for detecting transmission error for the transmitted data according to the pilot pattern of the detected pilot signal and determining whether the transmitted data are retransmitted according to a result of the detection.

**20.** The apparatus as claimed in claim 19, wherein the pilot signal has one of pilot patterns perpendicular to each other according to whether the transmitted data contain an error.

21. The apparatus as claimed in claim 20, wherein the channel estimator comprises:

multipliers for respectively performing a multiplication operation for the received pilot pattern and the preset pilot patterns perpendicular to each other;
accumulators for respectively accumulating a result of the multiplication; and
comparator for comparing results of accumulation by the accumulators and detecting the pilot pattern corresponding to whether the transmitted data contain an error.

22. The apparatus as claimed in claim 21, wherein the transmitted data are determined to be retransmitted when the pilot signal has a pilot pattern used when there is no report about whether the transmitted data contain an error.

EXISTING PHYSICAL CHANNEL

ACK/NACK INFORMATION OF
UPLINK PACKETS

## FIG.1

EXISTING PHYSICAL CHANNEL

OTHER INFORMATION SIGNALS

ACK/NACK INFORMATION OF
UPLINK PACKETS

## FIG.2

FIG.3

EP 1 531 576 A2

400

RECEIVED
SIGNAL → CHANNEL
COMPENSATOR → • → DEMODULATOR → DATA

402

404

ACK/NACK
EXTRACTOR → PACKET
CHANNEL
ADJUSTER → RETRANSMISSION
IS PERFORMED
OR NOT

406

## FIG.4

404

502

RECEPTION
JUDGMENT UNIT

OUTPUT OF
CHANNEL
COMPENSATOR → DPCH PILOT
EXTRACTOR → DPCH PILOT FIELD
PATTERN DETECTOR → ACK/NACK
JUDGMENT UNIT → ACK/NACK

500

504

506

## FIG.5

START

600

ACKNOWLEDGEMENT
TIMING?

NO

604 — GENERATE ACK/NACK SIGNAL
HAVING A VALUE OF +1

YES

PROCESSING RESULT OF
UPLINK PACKET CHANNEL
(ACK/NACK)

CONVERT ACK/NACK INFORMATION
TO A BINARY SIGNAL(+1/−1) — 602

MULTIPLY ACK/NACK SIGNAL BY PILOT
SIGNAL AND INSERT MULTIPLICATION
RESULT INTO DPCH FRAME — 606

DEMODULATION AND
CHANNEL DECODING FOR
UPLINK PACKET CHANNEL — 620

DOWNLINK DPCH MODULATION
AND TRANSMISSION — 608

CHANNEL

TRANSMIT UPLINK
PACKET CHANNEL — 618

RECEIVE/DESPREAD
DOWNLINK DPCH SIGNAL — 610

EXTRACT ACK/NACK
SIGNAL — 616

CHANNEL COMPENSATION — 612

DEMODULATION AND
CHANNEL DECODING — 614

END

FIG.6

EP 1 531 576 A2

FIG.7

FIG.8

FIG.9

START

1000

ACKNOWLEDGEMENT TIMING? — NO → 1004 ~ SELECT $p_{i0}(n)$

YES

PROCESSING RESULT OF UPLINK PACKET CHANNEL (ACK/NACK) → SELECT $\{p_{i0}(n), p_{i1}(n)\}$ ACCORDING TO ACK/NACK ~1002

INSERT SELECTED PILOT PATTERN INTO DPCH FRAME ~1006

DEMODULATION AND CHANNEL DECODING FOR UPLINK PACKET CHANNEL ~1022

DOWNLINK DPCH MODULATION AND TRANSMISSION ~1008

CHANNEL

TRANSMIT UPLINK PACKET CHANNEL ~1020

RECEIVE/DESPREAD DOWNLINK DPCH SIGNAL ~1010

EXTRACT ACK/NACK SIGNAL ~1018

CHANNEL ESTIMATION ~1012

CHANNEL COMPENSATION ~1014

DEMODULATION AND CHANNEL DECODING ~1016

END

FIG.10